Europäisches Patentamt

European Patent Office

Office européen des brevets

(19)

(11) Veröffentlichungsnummer : **0 093 238**
**B1**

(12) # EUROPÄISCHE PATENTSCHRIFT

(45) Veröffentlichungstag der Patentschrift :
30.07.86

(21) Anmeldenummer : 83101535.9

(22) Anmeldetag : 18.02.83

(51) Int. Cl.⁴ : **B 60 R 22/46**

(54) **Aufwickelvorrichtung für Sicherheitsgurte.**

(30) Priorität : 29.04.82 DE 3215925

(43) Veröffentlichungstag der Anmeldung :
09.11.83 Patentblatt 83/45

(45) Bekanntmachung des Hinweises auf die Patenterteilung : 30.07.86 Patentblatt 86/31

(84) Benannte Vertragsstaaten :
FR GB IT SE

(56) Entgegenhaltungen :
DE-A- 2 262 889
DE-A- 2 517 572
DE-A- 3 040 667
DE-A- 3 131 637
FR-A- 2 279 429
FR-A- 2 491 340

(73) Patentinhaber : Bayern-Chemie Gesellschaft für flugchemische Antriebe mit beschränkter Haftung
D-8261 Aschau a. Inn (DE)

(72) Erfinder : Nilsson, Karl-Erik
Johann-Sebastian-Bach-Strasse 56
D-8012 Ottobrunn (DE)

(74) Vertreter : Frick, Gerhard
Harthausener Strasse 18 Ortsteil Neukeferloh
D-8011 Grasbrunn (DE)

## Beschreibung

Die Erfindung bezieht sich auf eine Aufwickelvorrichtung für Sicherheitsgurte in Fahrzeugen nach dem Oberbegriff des Anspruchs 1.

Rückstrammer dienen dazu, eine Gurtlose beim Fahrzeugaufprall durch Rückziehen des Gurtes zu beseitigen, damit der freie Vorfallweg bis zum Wirksamwerden des Gurts möglichst gering ist.

Eine Aufwickelvorrichtung mit einem Rückstrammer soll dabei insbesondere drei Anforderungen erfüllen. Erstens soll der Rückstrammer die vorhandene Gurtlose (beispielsweise 20 cm) beseitigen können, zweitens soll er in dem geringen zur Verfügung stehenden Platz in Kraftfahrzeugen untergebracht werden können und drittens soll er, jedenfalls nur mit minimalen Änderungen, nachträglich an die vorhandenen serienmäßigen und wegen ihrer großen Stückzahl entsprechend kostengünstigen Gurtaufrollautomaten angebracht werden können.

Aus der DE-A-22 62 889 ist eine Aufwickelvorrichtung bekannt, bei der die Wickelwelle ein von den Treibgasen des pyrotechnischen Treibsatzes beaufschlagter Drehkolben ist. Bei dieser Aufwickelvorrichtung kann der mit einem Flügel versehene Drehkolben jedoch nur um etwa 310° gedreht werden, was zu einer Beseitigung einer größeren Gurtlose nicht ausreicht.

Um den Umdrehungswinkel der Wickelwelle zu vergrößern, weist bei der Aufwickelvorrichtung nach der DE-A-25 10 514 der nach dem Drehkolbenprinzip arbeitende Motor einen drehbar gelagerten Zylinder auf, der zwei Ringkammern aufnimmt, in denen jeweils ein drehbar gelagerter Drehkolben angeordnet ist, wobei der Zylinder die Wickelwelle antreibt, indem ein am Zylinder angeordneter Bolzen durch Treibgasbeaufschlagung in eine Rast an der Wickelwelle einschnellt. Diese Aufwickelvorrichtung erfordert also einen verhältnismäßig verwickelt aufgebauten Motor. Auch kann sie nicht an die vorhandenen serienmäßigen Gurtaufrollautomaten angebracht werden.

Aus der DE-A-25 17 572 ist eine Aufwickelvorrichtung bekannt, bei der ein von Treibgasen beaufschlagter Kolben, der in einer koaxialen Bohrung der Wickelwelle angeordnet ist, durch Führung entlang einer sich durch den Kolben erstreckenden Schnecke die Wickelwelle antreibt. Damit die Wickelwelle sich nur in einer Richtung drehen kann, ist eine Rücklaufsperre in Form einer federbelasteten Axial-Zahnkupplung vorgesehen, deren mit der Wickelwelle drehfest verbundene Zahnscheibe federbelastet mit einer gehäusefesten Verzahnung in Eingriff steht.

Aus der FR-A-24 91 340 ist eine Abwickelvorrichtung nach dem Oberbegriff des Anspruchs 1 bekannt. Dabei ist der Rückstrammerantrieb durch einen von den Treibgasen eines pyrotechnischen Treibsatzes beaufschlagbaren Kolben in einem Zylinderrohr gebildet. Am Kolben ist ein Seil befestigt, das um eine Kupplungsscheibe gewickelt ist. Zwischen der Kupplungsscheibe und der Wickelwelle ist die Freilaufkupplung vorgesehen.

Nachteilig bei dieser bekannten Aufwickelvorrichtung ist, daß nur in der Wickelwelle bzw. der Kupplungsscheibe Energie des Rückstrammerantriebs gespeichert werden kann. Weiterhin wird die Energie des Kolbens unmittelbar über das Seil auf die Aufwickelwelle bzw. die Kupplungsscheibe übertragen, wodurch ein Reißen des Seiles zu befürchten ist.

Die Erfindung, wie sie in den Ansprüchen gekennzeichnet ist, löst die Aufgabe, die bekannten Aufwickelvorrichtungen so zu verbessern, daß bei kompaktem Aufbau der Aufwickelvorrichtung mit einem einfach aufgebauten, an die vorhandenen, serienmäßigen Gurtaufrollautomaten mit minimalen Änderungen anbringbaren Rückstrammer durch eine hohe dynamische Wirkung desselben eine ausreichende Beseitigung der Gurtlose sichergestellt ist.

Durch die Erfindung kann anstelle des Zweikammer-Drehkolbenantriebs nach der DE-A-25 10 514 ein Einkammer-Drehkolbenantrieb gemäß der DE-A-22 62 889 verwendet werden. Zwar beträgt der Drehwinkel beim Hub des Drehkolbens dann nur ca. 300°, jedoch bleibt aufgrund der Freilaufkupplung der beim Zünden des Treibsatzes erzeugte, in den rotierenden Massen vom Rückstrammer und Gurtaufrollautomat eingespeiste Antriebsimpuls als Drehenergie erhalten, die die Gurtbandspule um einen ausreichend großen Winkel weiterdreht.

Unter Freilaufkupplung ist im vorstehenden Zusammenhang jedes Gesperre, das nur in einer Drehrichtung sperrt, zu verstehen. Weiterhin kann bei einem Drehkolbenantrieb sowohl der Drehkolben die Rotationsbewegung ausführen bei stillstehendem Drehzylinder, als auch umgekehrt (Stator-Rotor-Prinzip).

Nachstehend sind mehrere Ausführungsformen der erfindungsgemäßen Gurtaufrollwickelvorrichtung anhand der beigefügten Zeichnung näher erläutert. Darin zeigen :

Figuren 1 und 2 einen Längs- bzw. Querschnitt durch eine Ausführungsform eines Rückstrammers der Aufwickelvorrichtung ;

Figuren 3 und 4 eine Seiten — bzw. Voderansicht einer ersten Ausführungsform der Aufwickelvorrichtung ;

Figuren 5 und 6 einen Längs- bzw. Querschnitt durch eine erste Ausführungsform der Freilaufkupplung ;

Figuren 7 und 8 eine teilweise längsgeschnittene Ansicht bzw. einen Querschnitt einer zweiten Ausführungsform der Freilaufkupplung ;

Figur 9 einen Querschnitt durch eine dritte Ausführungsform der Freilaufkupplung in teilweiser Wiedergabe ;

Figuren 10 und 11 eine teilweise längsgeschnittene Ansicht bzw. einen Querschnitt einer vierten Ausführungsform der Freilaufkupplung ;

Figuren 12 und 13 einen Längs- bzw. Querschnitt durch eine fünfte Ausführungsform der Freilaufkupplung;

Figur 14 eine teilweise längsgeschnittene Ansicht einer siebten Ausführungsform der Freilaufkupplung; und

Figur 15 einen Querschnitt durch eine sechste Ausführungsform der Freilaufkupplung.

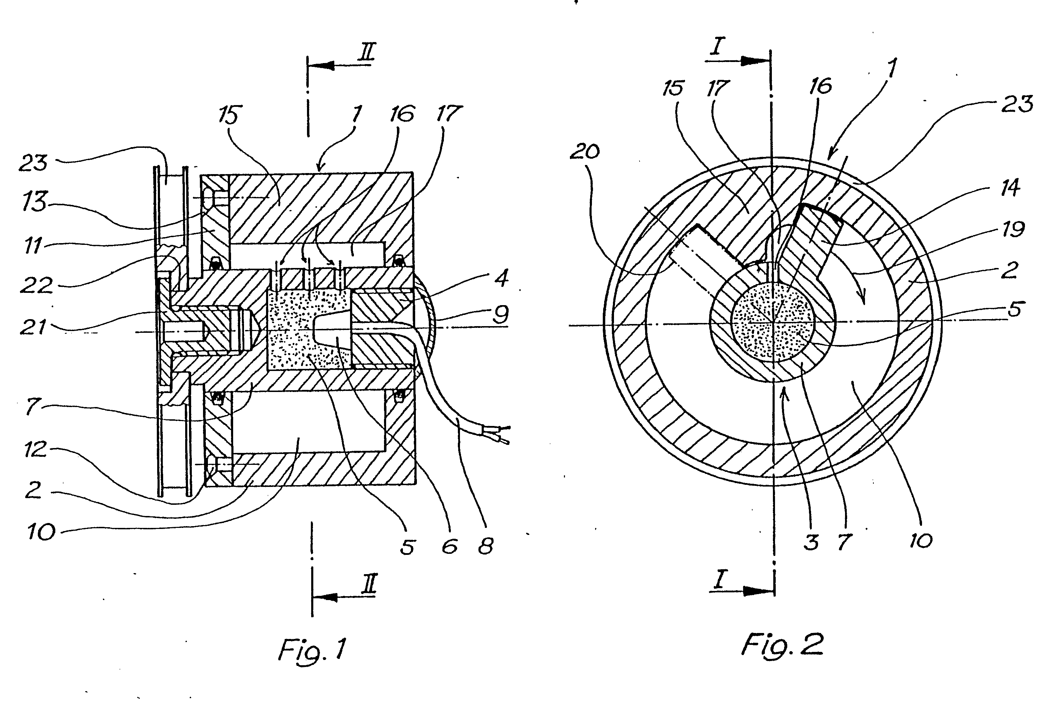

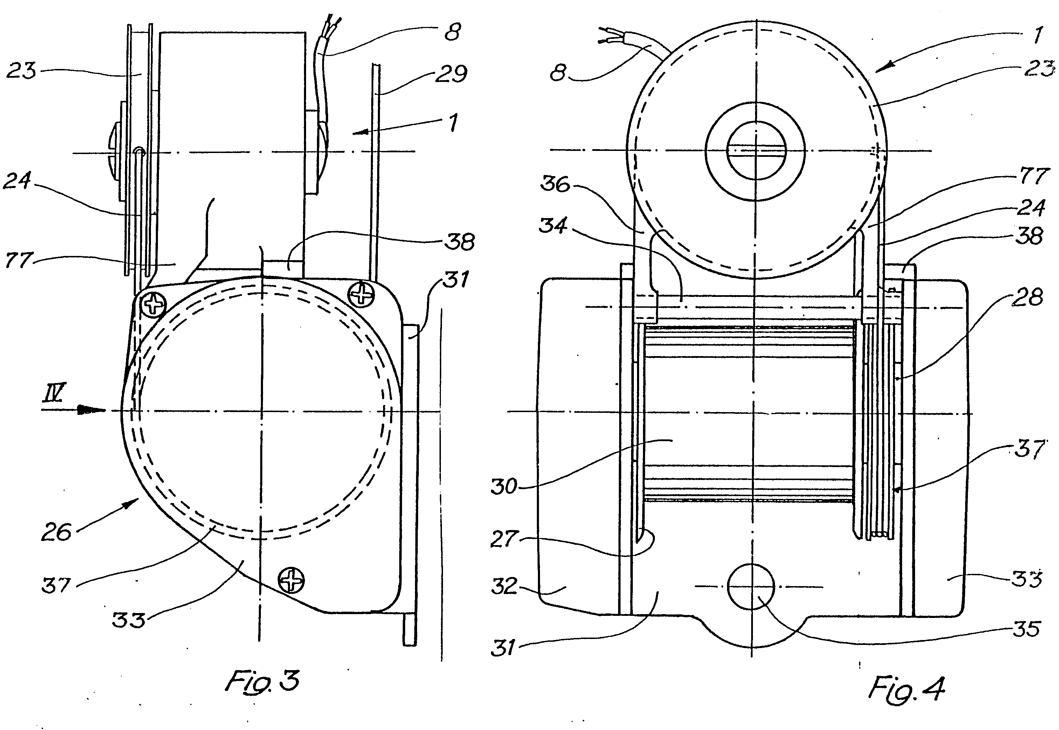

Gemäß Figuren 1 und 2 besteht der Rückstrammer 1 im wesentlichen aus einem Drehzylinder 2 und einem darin drehbar gelagerten Drehkolben 3, der als Einflügeldrehkolben ausgebildet ist.

Abgedichtet über einen Verschluß 4 befindet sich ein Treibsatz 5 und ein Zünder 6 in der Welle 7 des Drehkolbens 3. Ein Zündkabel 8 führt durch den Verschluß 4 und eine darauf angeordnete Abdeckkappe 9 vom Zünder 6 nach außen. Der Ringraum 10 wird auf der dem Verschluß 4 gegenüberliegenden Stirnseite durch einen Deckel 11 abgeschlossen. Die Verbindung des Deckels 11 mit dem Drehzylinder 2 wird vorteilhafterweise durch Vernieten der einteilig mit dem Drehzylinder 2 verbundenen Stifte 12 in den dafür vorgesehenen Senkbohrungen 13 erreicht. Der Flügel 14 des Einflügeldrehkolbens 3 liegt an dem durch einen Widerlagernocken 15 gebildeten Drehzylinderboden an.

Neben dem Flügel 14 des Drehkolbens 3 erstrecken sich Bohrungen 16 von dem Treibsatz 5 durch die Welle in die Expansionskammer 17 des Ringraumes 10.

Nach erfolgter Zündung des Treibsatzes 5 gelangen somit die Treibgase über die Bohrung 16 in die Welle 7 in die von dem Flügel 14 und dem Widerlagernocken 15 eingeschlossene Expansionskammer 17 und dehnen sich aus. Dabei wird der Flügel 14 des Drehkolbens 3 in Richtung des Pfeils 19 in Figur 2 in Rotation versetzt. Er dreht sich um ca. 270° bis er an der gegenüberliegenden Seite des Widerlagernockens 15 anschlägt, d. h. die strichpunktiert dargestellte Endstellung 20 erreicht.

Die mit einer Befestigungsschraube 21 über einen Formschluß 22 mit der Welle 7 des Drehkolbens 3 verbundene Antriebsscheibe 23 wird dabei mitgedreht. Ein an der Antriebsscheibe 23 mit einem Ende befestigtes Kraftübertragungselement, z. B. ein Seil 24 (Fig. 3), wird damit auf die Antriebsscheibe 23 gewickelt.

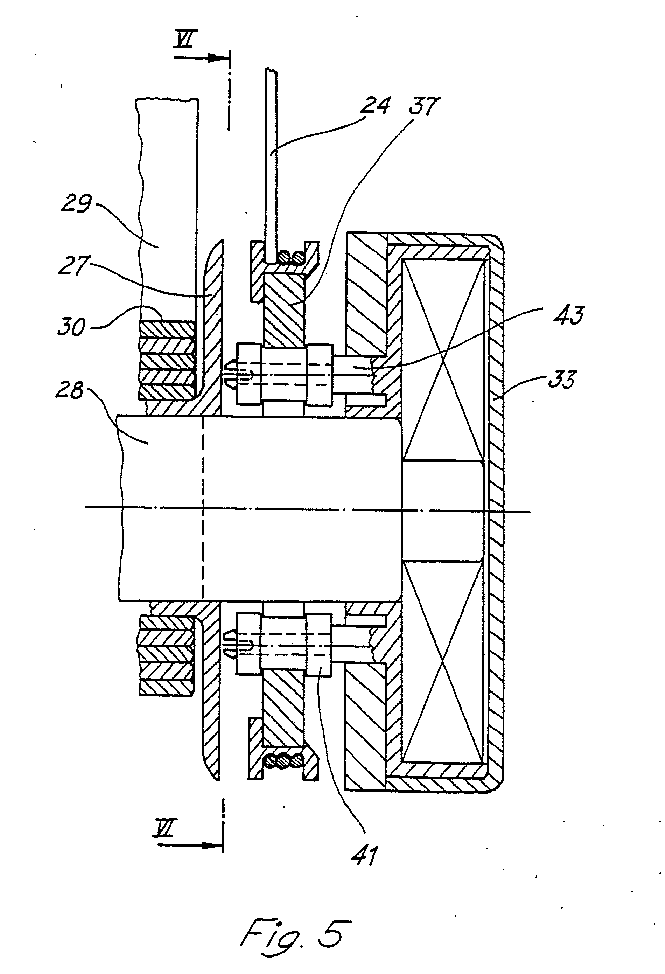

Bei der Ausführungsform nach Figuren 3 und 4 ist der Rückstrammer 1 mit der Antriebsscheibe 23 oberhalb des Gurtaufrollautomaten 26 angebracht.

Bei dem Gurtaufrollautomaten 26 handelt es sich um einen der heutzutage gängigen Typen. Das heißt, auf einer Gurtbandspule 27 auf einer Welle 28 ist ein Gurtband 29 zu einem Wickel 30 aufgerollt. Die Aufrollerwelle 28 ist in einem Gehäuse 31 mit plattenförmiger Rückwand drehbar gelagert. Zum Abdecken des Blockiermechanismus dient eine Abdeckkappe 32, während die Aufwickelfeder des Aufrollautomaten 26 in einem Gehäuse 33 untergebracht ist. Zwischen der Abdeckkappe 32 bzw. dem Federgehäuse 33 erstreckt sich oberhalb der Gurtbandspule 27 eine am Gehäuse 31 befestigte Distanzstange 34, an der der Rückstrammer 1 befestigt ist.

Das Kraftübertragungselement bzw. das Seil 24 erstreckt sich von der Antriebsscheibe 23 zu einer Kupplungsscheibe 37, um die es etwa dreimal gewickelt ist. Zwischen der Kupplungsscheibe 37 und der Aufrollerwelle 28 ist eine als Freilauf ausgebildete Mitnehmerkupplung vorgesehen.

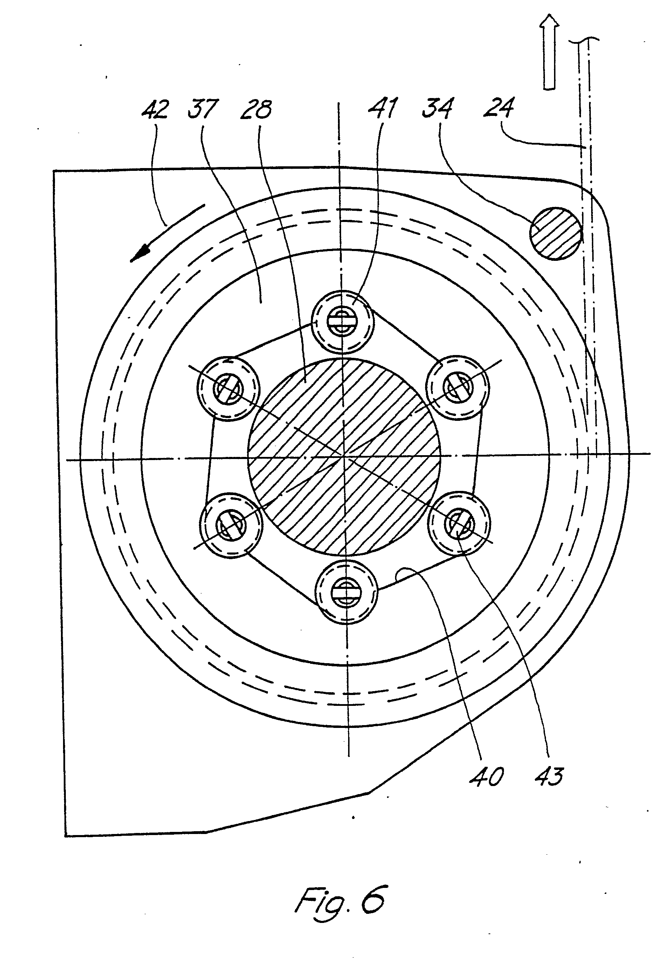

Gemäß Figuren 5 und 6 ist bei der als Freilaufkupplung ausgebildeten Mitnehmerkupplung zwischen der Kupplungsscheibe 37 und der Aufrollerwelle 28 eine Radial-Innenfreilaufkupplung vorgesehen. Das heißt, in der das Außenteil der Freilaufkupplung bildenden Kupplungsscheibe 37 ist eine Anzahl keilförmig zulaufender Ausnehmungen 40 angebracht, in denen Klemmrollen 41 liegen. Wenn sich die Kupplungsscheibe 37 in Richtung des Pfeiles 42 in Figur 6 schneller dreht als die Aufrollerwelle 28, verklemmen sich die Rollen 41 in den keilförmigen Ausnehmungen 40 und übertragen das Drehmoment der Kupplungsscheibe 37 kraftschlüssig auf die Aufrollerwelle 28, d. h. der Freilauf sperrt, während die Rollen 41 sich aus den keilförmigen Ausnehmungen 40 herausbewegen, d. h. die Aufrollerwelle 28 von der Kupplungsscheibe 37 getrennt und damit der Freilauf geöffnet wird, wenn sich die Aufrollerwelle 28 schneller dreht als die Kupplungsscheibe 37.

Die Klemmrollen 41 sind mit dem Federgehäuse 33 über Halter 43 verbunden, die Sollbruchstellen aufweisen. Die Klemmrollenhalter 43 sind radial nach außen vorgespannt, um eine klapperfreie, feste Fixierung der Kupplungsscheibe 37 während des normalen Betriebszustandes des Gurtaufrollautomaten sicherzustellen.

Wenn der Treibsatz 5 gezündet worden ist und die Antriebsscheibe 23 das Seil 24 aufwickelt, wird die Kupplungsscheibe 37 der Mitnehmerkupplung in Umdrehung versetzt. Die Klemmrollenhalter 41 brechen an den Sollbruchstellen 44 ab und die Klemmrollen 41 werden über die keilförmigen Ausnehmungen 40 gegen die Welle 28 gedrückt. Bereits nach wenigen Grad Drehung wird die Aufrollerwelle 28 somit mitgenommen. Der Antriebsimpuls aus dem abbrennenden Treibsatz 5 wird nun über den Drehkolben 3, die Antriebsscheibe 23, das Kraftübertragungselement bzw. Seil 24, die Kupplungsscheibe 37 und die Klemmrollen 41 auf die Aufrollerwelle 28 übertragen. Der Gurtstrammungsvorgang ist damit eingeleitet.

Wenn der Drehkolben 3 seine Endstellung 20 erreicht hat, ist die Beschleunigungsphase abgeschlossen. Der Drehkolben 3 und die Antriebsscheibe 23 bleiben dann schlagartig stehen. Das Seil 24 wird nun von der mit Schwung weiterdrehenden Kupplungsscheibe 37 abgewickelt. Aufgrund ihrer Masse und der Masse der an sie angeschlossenen Teile ist in der Aufrollerwelle 28 dadurch eine hohe Drehenergie gespeichert. Um diese Drehenergie zu nutzen, löst sich die Freilaufkupplung, d. h. die Klemmrollen 41 werden in ihre Ausgangslage zurückgedreht, die Kupplungsscheibe 37 bleibt stehen und die Aufrollerwelle 28 dreht frei weiter, bis die Drehenergie in Gurtstrammungsarbeit umgewandelt ist. Danach setzt die normale Blockierfunktion des Aufrollautomaten ein.

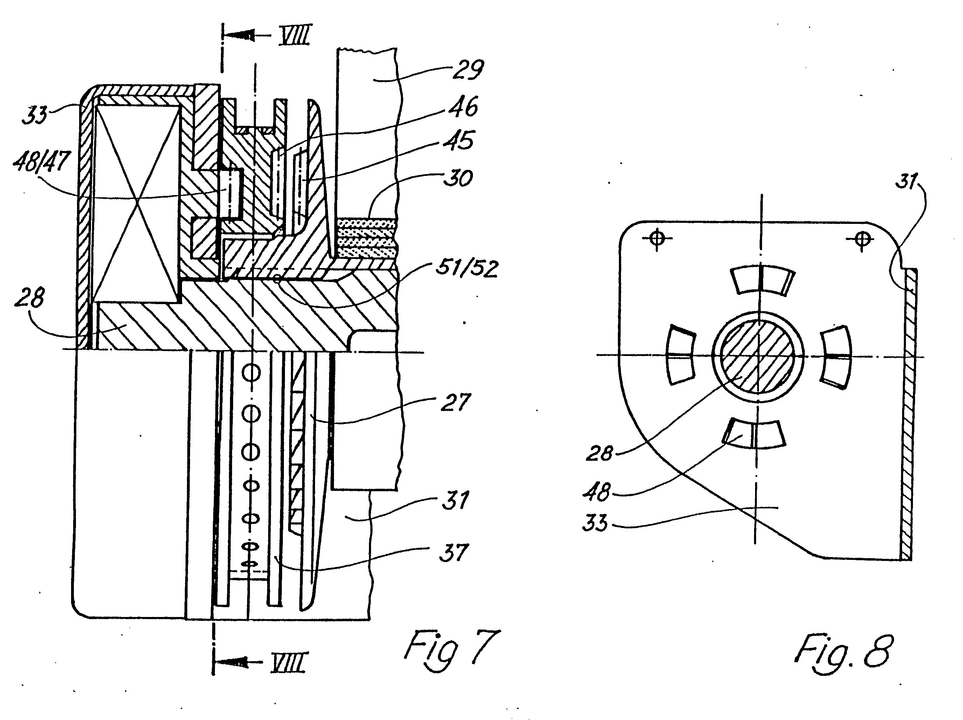

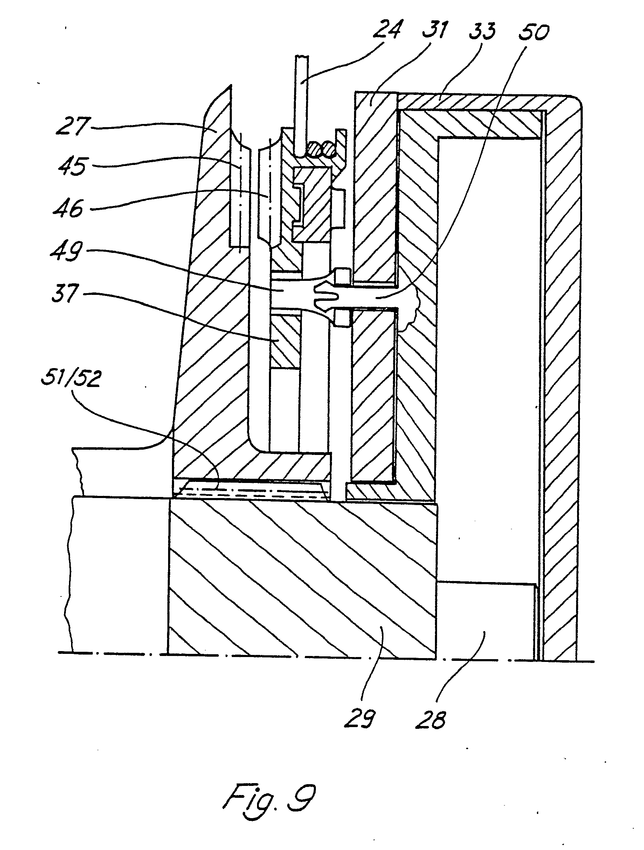

Bei der Ausführungsform nach Figuren 7 und 8 und bei der 'Ausführungsform der Freilaufkupplung nach Figur 9 ist die Kupplungsscheibe 37 axial verschiebbar auf der Aufrollerwelle 28 angeordnet. Weiterhin ist auf der der Kupplungsscheibe 37 zugewandten Stirnseite der Gurtbandspule 27 eine Verzahnung 45 vorgesehen, der eine entsprechende Verzahnung 46 an der Kupplungsscheibe 37 gegenüberliegt. Die Zahnköpfe der Verzahnungen 45 und 46 verlaufen in radialer Richtung. Die Verzahnungen 45 und 46 weisen ein sägezahnförmiges Profil auf, d. h. jeder Zahn besitzt eine senkrechte und eine schräge Zahnflanke.

Gemäß Figuren 7 und 8 ist die Kupplungsscheibe 37 mit einer negativen Andrückverzahnung 47 mit leichtem Preßsitz auf einer positiven Antriebsverzahnung 48 des Federgehäuses 33 befestigt. Während die Andrückverzahnung 47 an der Kupplungsscheibe 37 über den gesamten Umfang derselben verteilt ist, besteht die Andrückverzahnung 48 an dem Federgehäuse 33 aus vier Segmenten mit je zwei Zähnen, wie Figur 8 zeigt.

Bei der Ausführungsform nach Figur 9 ist die Kupplungsscheibe 37 über schräg verlaufende Führungsarme 49 mit dem Federgehäuse 33 verbunden, wobei die Führungsarme 49 an druckknopfartigen Ansätzen 50 des Federgehäuses 33 befestigt sind.

Im normalen Funktionszustand des Aufrollautomaten 26 stehen somit die Verzahnungen 45 und 46 bei beiden in Rede stehenden Ausführungsformen außer Eingriff.

Beim Zünden des Treibsatzes 5, d. h. wenn sie von dem in Figur 7 und 9 nicht dargestellten Kraftübertragungselement in Rotation versetzt wird, bewegt sich die Kupplungsscheibe 37 in Figur 7 axial nach rechts bzw. in Figur 9 axial nach links, wobei der Axialhub durch die Andrückverzahnung 47, 48 bzw. die schrägen Führungsarme 49 erfolgt, wobei letztere sich in axialer Richtung ausrichten und sich dann von den Ansätzen 50 lösen. Dadurch werden die Arretierverzahnungen 45, 46 fest verkuppelt. Über ein Kerbzahnprofil 51, 52 (Figur 7) wird die Aufrollerwelle 28 nunmehr direkt angetrieben und somit das Gurtband 29 aufgewickelt, bis der Strammungsvorgang abgeschlossen ist und der Gurtaufrollautomat 26 die Blockierung eingeleitet hat.

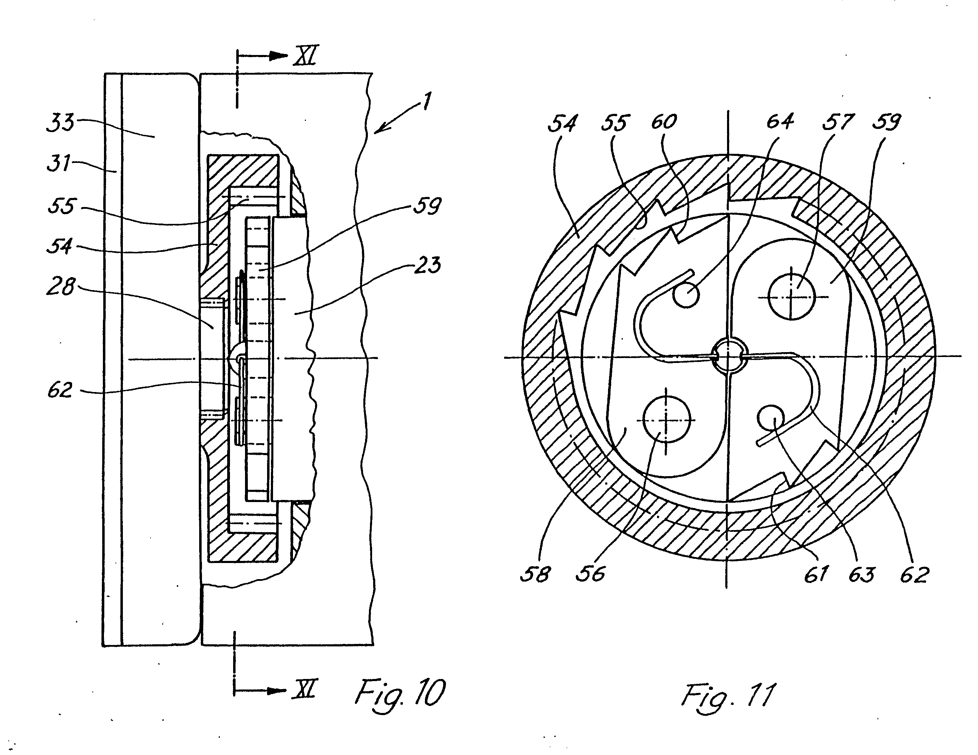

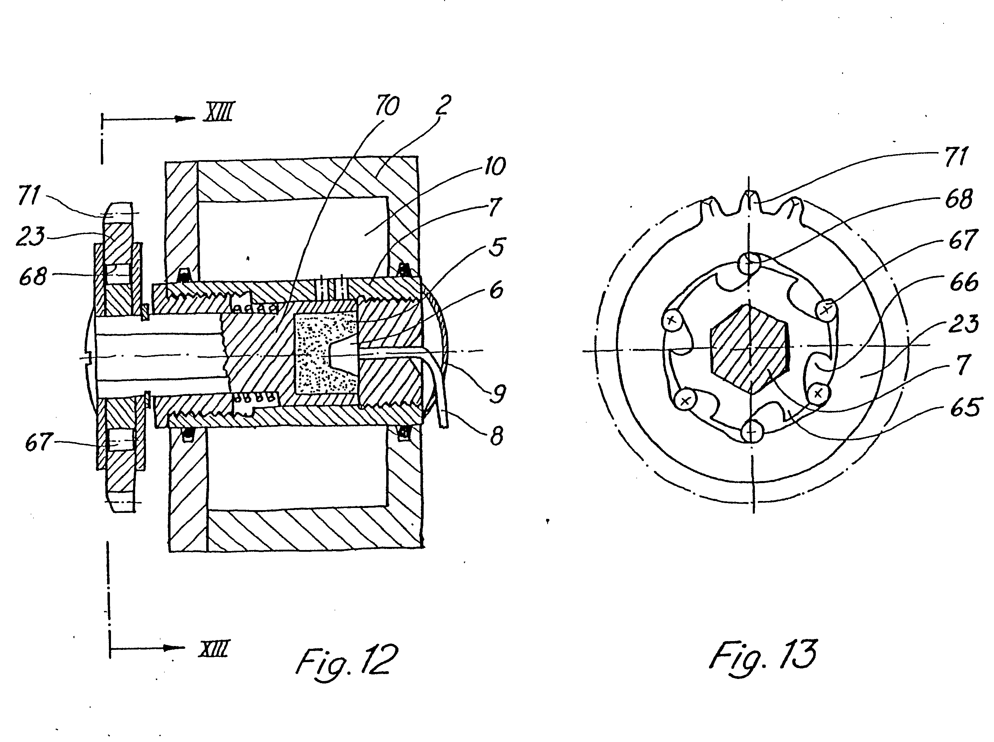

Bei der Ausführungsform nach Figuren 10 und 11 ist die Antriebsscheibe 23 des Drehkolbens 3 des Rückstrammers 1 koaxial zur Aufrollerwelle 28 des Gurtaufrollautomaten 26 angeordnet. An dem der Antriebsscheibe 23 zugewandten Ende der Aufrollerwelle 28 ist eine Kupplungsglocke 54 mit sägezahnförmiger Innenverzahnung 55 vorgesehen, während an zwei Zapfen 56, 57 an der Antriebsscheibe 23 jeweils eine verschwenkbare Kupplungsklinke 58, 59 mit Einrastverzahnungen 60, 61 angeordnet ist. Die Kupplungsklinken 58, 59 sind bei stillstehender Antriebsscheibe 23 durch eine Feder 62, die an Vorsprüngen 63, 64 der Kupplungsklinken 58, 59 angreift, radial nach innen gedrückt.

Beim Zünden des Treibsatzes 3 werden die Klinken 58, 59 nach einer kurzen Drehung des Drehkolbens 3 (ca. 5°) nach Art einer Fliehkraftkupplung gegen die Kraft der Feder 62 nach außen geschwenkt, so daß sie in Eingriff mit der Innenverzahnung 55 der Kupplungsglocke 54 geraten, die fest mit der Aufrollerwelle 28 verbunden ist. Nach Abschluß der Drehbewegung des Drehkolbens 3 setzt der Freilauf ein, indem die Klinken 58, 59 von der Kupplungsglocke 54 bzw. Aufrollerwelle 28 überholt werden. Die Innenverzahnung 55 der Kupplungsglocke 54 drückt dabei die Klinken 58, 59 in ihre Ausgangsstellung zurück. Die Aufrollerwelle 28 dreht frei weiter, bis die ansteigende Gurtkraft und die Kraft aus der Schwungenergie der Aufrollerwelle 28 und der mit ihr verbundenen Massen im Gleichgewicht stehen.

Bei der Ausführungsform nach Figuren 12 und 13 ist zwischen der Welle 7 des Drehkolbens 3 und der Antriebsscheibe 23 eine Radial-Außenfreilaufkupplung angeordnet. Dazu ist auf der Welle 7 ein Innenteil 65 aufgekeilt, in dem mehrere keilförmig zulaufende Ausnehmungen 66 angebracht sind, in denen Klemmrollen 67 liegen. Beim Sperren des Freilaufs, d. h. beim Klemmen der Rollen 67 in den keilförmigen Ausnehmungen 66 gelangen die Rollen 67 in ihren Außendurchmessern angepaßte Ausnehmungen 68 der Antriebsscheibe 23, wie Figur 13 zu entnehmen ist.

Wie aus Figur 12 ersichtlich, ist die Welle 7 des Drehkolbens 3 aus einem in einem Zylinder 69 drehfest, aber axial verschiebbaren Kolben 70 gebildet, der beim Zünden des Treibsatzes 5 ausgefahren wird. Weiterhin ist die Antriebsscheibe 23 mit einer Außenverzahnung 71 versehen. Beim Zünden des Treibsatzes 5 wird damit die Antriebsscheibe 23 um einen bestimmten Weg ausgerückt und dadurch mit einem (nicht dargestellten) Zahnrad gekuppelt, das die Aufrollerwelle 28 antreibt.

Durch die Anordnung der Freilaufkupplung vor der Antriebsscheibe 23 wird auch die in der Antriebsscheibe 23 gespeicherte Drehenergie nach der Drehbewegung des Drehkolbens 3 für den Strammungsvorgang ausgenutzt.

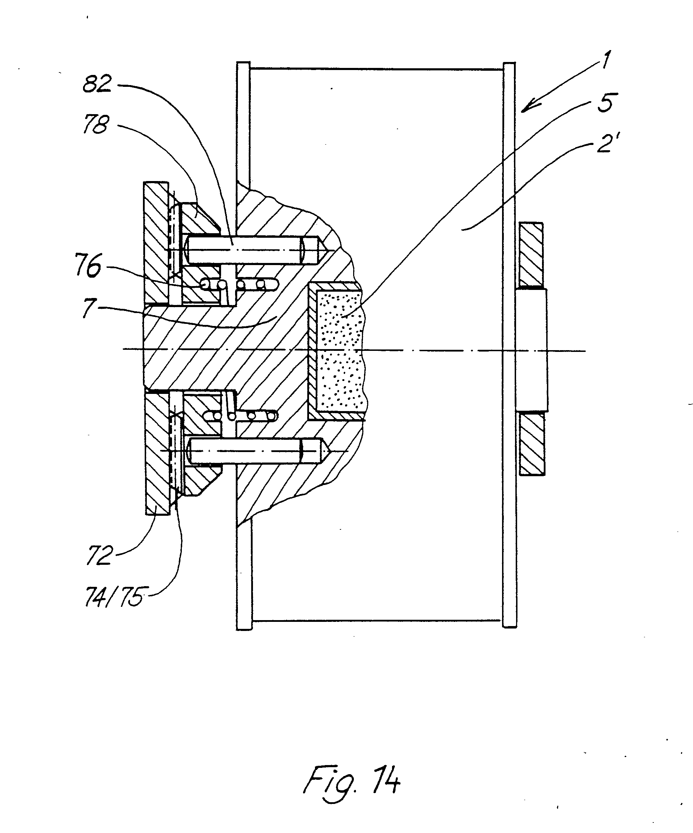

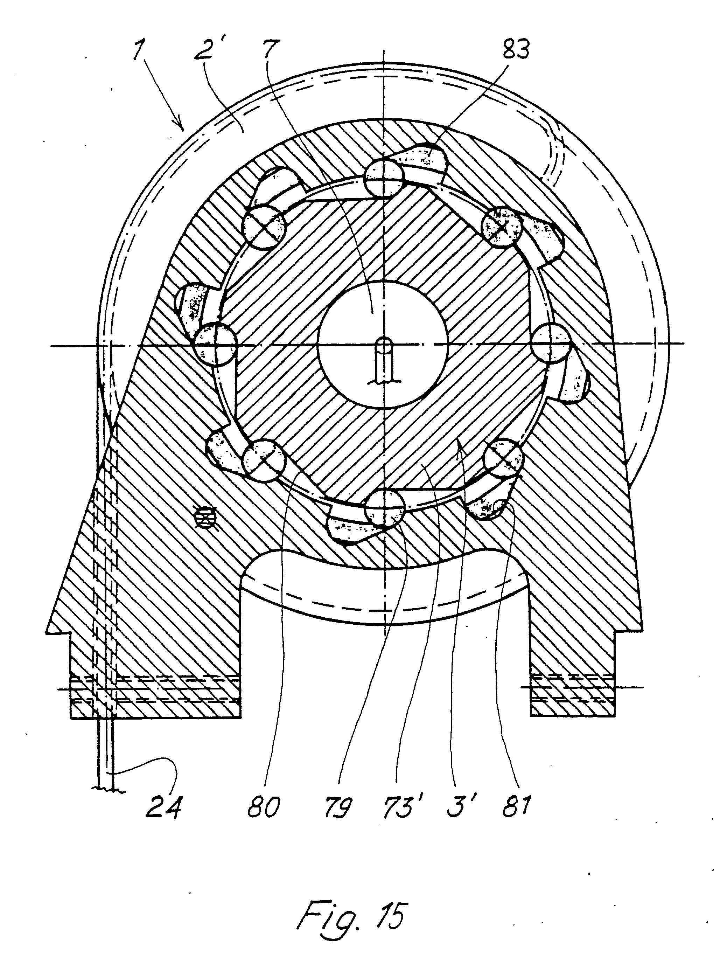

Bei der Ausführungsform nach Figur 14 und bei der Ausführungsform nach Figur 15 ist das Kraftübertragungselement bzw. Seil 24 auf der Mantelfläche des drehbar angeordneten Drehzylinders 2' befestigt. Der Drehkolben 3' bildet hingegen das Absperrteil des Rotationsantriebsmotors. In diesem Fall ist also der Drehzylinder 2' das Drehelement und der Drehkolben 3' das Absperrteil.

Weiterhin ist zwischen dem Drehkolben 3' und dem Gehäuse 72 des Rückstrammers 1 eine Freilaufkupplung vorgesehen.

Bei der Ausführungsform nach Figur 14 ist die Freilaufkupplung durch eine koaxial zur Welle 7 des Drehkolbens 3' angeordnete, mit demselben drehfest verbundene und axial verschiebbare Scheibe 78 mit einer sägezahnförmigen, radial verlaufende Zahnköpfe aufweisenden Verzahnung 74 und durch eine entsprechende, der Verzahnung 74 der Scheibe 78 gegenüberliegende gehäusefeste Verzahnung 75 gebildet. Die beiden Verzahnungen 74 und 75 sind durch eine Feder 76 aufeinander zu belastet. Die Scheibe 78 ist durch Zapfen 82 geführt.

Bei der Ausführungsform nach Figur 15 ist zwischen dem Drehkolben 3' und dem Gehäuse 72 des Rückstrammers 1 eine Radial-Innenfreilaufkupplung vorgesehen, deren Innenteil 73 drehfest auf der Welle 7 des Drehkolbens 3' angeordnet ist.

Beim Zünden des Treibsatzes 5 wird durch die expandierenden Treibgase der Drehkolben 3' bei der Ausführungsform nach Figur 15 linksdrehend beaufschlagt, der Drehzylinder 2' rechtsdrehend. Der Drehkolben 2' wird jedoch zunächst über die Klemmrollen 79 gegen das Gehäuse bzw. den Rahmen 72 abgestützt, d. h. er kann sich nicht gegen den Uhrzeigersinn drehen. Stattdessen wird der Drehzylinder 2' mit dem Kraftübertragungselement bzw. Seil 24 im Uhrzeigersinn beschleunigt. Wenn der Flügel des Drehzylinders 2' auf den Widerlagernocken des Drehkolbens 3' trifft, wird der Drehkolben 3' vom Drehzylinder 2' im Uhrzeigersinn drehend mitgenommen. Dabei werden die Klemmrollen 79 von den Druckflächen 80 in die Ausnehmungen 81 des Rahmens 72 gepreßt. Damit ist der Überholkupplungsvorgang abgeschlossen. Der Drehkolben 3' dreht im Freilauf gemeinsam mit dem Drehzylinder 2' bis zum Abbau der Schwungenergie aus. Die Ausführungsform nach Figur 14 funktioniert in entsprechender Weise.

Die Klemmrollen 79 sind aus Kunststoff und an einen Ring 83 einstückig angebunden.

**Patentansprüche**

1. Aufwickelvorrichtung für Sicherheitsgurte in Fahrzeugen mit einem Gurtaufrollautomaten (26) und einem Rückstrammer (1), der durch einen Motor mit einem durch die Treibgase eines pyrotechnischen Treibsatzes (5) beaufschlagbaren Kolben (3) antreibbar ist, der nach dem Zünden des Treibsatzes (5) über eine Mitnehmerkupplung die Gurtbandspule (27) des Gurtaufrollautomaten (26) antreibt, wobei die Mitnahme der Gurtbandspule (27) über eine Freilaufkupplung erfolgt, die während des Antriebs durch den Motor des Rückstrammers (1) mit begrenztem Arbeitsweg bei Strammungsvorgang sperrt und sich danach im Sinne einer Überholkupplung öffnet, dadurch gekennzeichnet, daß der Motor zum Antrieb des Rückstrammers (1) durch einen nach dem Drehkolbenprinzip arbeitenden Motor gebildet wird.

2. Aufwickelvorrichtung nach Anspruch 1, dadurch gekennzeichnet, daß die Gurtbandspule (27) drehfest mit der Gurtaufrollerwelle (28) verbunden ist und der Drehkolben (3) eine Antriebsscheibe (23) aufweist, welche koaxial zur Gurtaufrollerwelle (28) angeordnet ist, und zur Bildung des Freilaufs eine an der Gurtaufrollerwelle (28) drehfest angeordnete Kupplungsglocke (54) mit sägezahnförmiger Innenverzahnung (50) und an der Antriebsscheibe (23) wenigstens eine radial verschwenkbare Klinke (58, 59) vorgesehen ist, die bei plötzlicher Aktivierung mit hohem Beschleunigungsanstieg in die Innenverzahnung (55) der Kupplungsglocke (54) einrastet.

3. Aufwickelvorrichtung nach Anspruch 1, dadurch gekennzeichnet, daß der Drehkolben (3) mit einer Antriebsscheibe (23) versehen ist und die Freilaufkupplung zwischen der Welle (7) des Drehkolbens (3) und der Antriebsscheibe (23) vorgesehen ist.

4. Aufwickelvorrichtung nach Anspruch 3, dadurch gekennzeichnet, daß zwischen der Welle (7) des Drehkolbens (3) und der Antriebsscheibe (23) eine Radial-Außenfreilaufkupplung mit einem auf der Welle (7) drehfest angeordneten Innenteil (65) und der Antriebsscheibe als Außenteil vorgesehen ist.

5. Aufwickelvorrichtung nach Anspruch 4, dadurch gekennzeichnet, daß die Gurtbandspule (27) über ein Zahnradgetriebe antreibbar ist und die Antriebsscheibe (23) als Zahnrad ausgebildet ist, das zur Bildung der Mitnehmerkupplung in ein Zahnrad des Zahnradgetriebes axial einrückbar ist.

6. Aufwickelvorrichtung nach Anspruch 1, dadurch gekennzeichnet, daß der Drehzylinder (2') und der Drehkolben (3') das Absperrteil des Rotationsantriebsmotors bildet und die Freilaufkupplung zwischen dem Drehkolben (3') und dem Gehäuse (72) vorgesehen ist.

7. Aufwickelvorrichtung nach Anspruch 6, dadurch gekennzeichnet, daß zwischen dem Drehkolben (3') und dem Gehäuse (72) eine Radial-Innenfreilaufkupplung vorgesehen ist, deren Innenteil (73) drehfest auf der Welle (7) des Drehkolbens (3') angeordnet ist.

8. Aufwickelvorrichtung nach Anspruch 7, dadurch gekennzeichnet, daß die Klemmrollen (79) der Freilaufkupplung aus Kunststoff bestehen und an einen Ring (82) einstückig angebunden sind.

9. Aufwickelvorrichtung nach Anspruch 6, dadurch gekennzeichnet, daß die Freilaufkupplung durch eine koaxial zur Welle (7) des Drehkolbens (3') angeordnete, mit derselben drehfest verbundene Scheibe (78) mit einer sägezahnförmigen, radial verlaufende Zahnköpfe aufweisenden Verzahnung (74) und durch eine entsprechende, der Verzahnung (74) der Scheibe (78) gegenüberliegende, gehäusefeste Verzahnung (75) gebildet wird, wobei die beiden Verzahnungen (74, 75) aufeinander zu federbelastet sind und bei Drehung des Drehkolbens (3') in der Drehrichtung des Drehzylinders (2') durch die sägezahnartige Zahnform außer Eingriff kommen.

## Claims

1. Winding device for safety belts in vehicles, with an automatic belt reeling means (26) and a backtensioning device (1) which can be driven by a motor having a piston (3) which can be subject to the action of a pyrotechnic propulsive charge (5) and which after ignition of the said propulsive charge (5) drives the belt spool (27) of the automatic belt reeling means (26) through a driving clutch, the entrainment of the belt spool (27) being effected by an overrunning clutch which during the driving of the motor of the back-tensioning device (1) engages with a limited operating effect on the tightening process and then releases in the direction corresponding to an overrunning clutch, characterized by the fact that the motor for driving the back-tensioning device (1) is formed by a motor operating on the rotary piston principle.

2. Winding device in accordance with Claim 1, characterized by the fact that the belt spool (27) is rotationally connected with the belt reeling shaft (28) and that the rotary piston (3) has a driving plate (23) positioned coaxially with respect to the belt roller shaft (28) and that in order to form the overrunning system a clutch housing (54) with an internal saw-tooth system (50) is mounted in a rotationally secure manner on the belt reeling shaft (28) and at least one radially pivotable pawl (58, 59) is provided on a driving plate (23) which, on being suddenly activated by high acceleration force, engages the internal teeth (55) of the clutch housing (54).

3. Winding device in accordance with Claim 1, characterized by the fact that the rotary piston (3) is provided with a driving plate (23) and the overrunning clutch is positioned between the shaft (7) of the rotary piston (3) and the driving plate (23).

4. Winding device in accordance with Claim 3, characterized by the fact that between the shaft (7) of the rotary piston (3) and the driving plate (23) a radial external overrunning clutch is provided of which the internal part (5) is rotationally secured on the shaft (7) and of which the external part is formed by the driving plate.

5. Winding device in accordance with Claim 4, characterized by the fact that the belt spool (27) can be driven through a gearing and that the driving plate (23) is constructed as a gear wheel which, in order to form the driving clutch, can be caused to move in an axial direction to engage a gear wheel of the spool gear system.

6. Winding device in accordance with Claim 1, characterized by the fact that a rotary cylinder (2') and a rotary piston (3') form the closed off part of the rotational drive motor and that the overrunning clutch is provided between the rotary piston (3') and the housing (72).

7. Winding device in accordance with Claim 6, characterized by the fact that between the rotary piston (3') and the housing (72) a radial internal overrunning clutch is provided of which the internal part (73) is mounted fast in rotation on the shaft (7) of the rotary piston (3').

8. Winding device in accordance with Claim 7, characterized by the fact that clamping rollers (79) of the overrunning clutch comprise a plastic material and are connected in one piece to a ring (82).

9. Winding device in accordance with Claim 6, characterized by the fact that the overrunning clutch is formed by a plate (78) mounted coaxially about the shaft (7) of the rotary piston (3') and rotationally connected to the said shaft and having a saw-tooth system of teeth (74) of which the heads of the teeth extend radially and with a corresponding system of teeth (75) situated opposite the system of teeth (74) of the plate (78) and integral with the housing, the two systems of teeth (74, 75) being spring-loaded towards each other and which, on rotation of the rotary piston (3') in the direction of rotation of the rotary cylinder (2'), disengage from each other due to the saw-toothed shape of the teeth.

## Revendications

1. Dispositif d'enroulement pour ceinture de sécurité de véhicules, comprenant un enrouleur automatique de ceinture (26) et un rétro-tendeur (1) qui peut être entraîné au moyen d'un moteur comprenant un piston (3) pouvant être actionné par les gaz propulsifs d'une charge pyrotechnique (5), piston (3) qui entraîne, après l'allumage de la charge (5) la bobine (27) d'enroulement de la ceinture de l'enrouleur automatique (26) par l'intermédiaire d'un embrayage d'entraînement, l'entraînement de la bobine (27) s'effectuant par l'intermédiaire d'un embrayage à roue libre qui se bloque après un trajet limité lors de l'opération de tension, lorsque le moteur entraîne le rétro-tendeur (1) et qui s'ouvre ensuite dans le sens d'un embrayage à dépassement, caractérisé par le fait que le moteur destiné à entraîner le rétro-tendeur (1) est constitué par un moteur fonctionnant selon le principe du piston rotatif.

2. Dispositif d'enroulement selon la revendication 1, caractérisé par le fait que la bobine (27) d'enroulement de la ceinture est solidaire, en rotation de l'arbre d'enroulement (28) de la ceinture, par le fait que le piston rotatif (3) présente un disque d'entraînement (23) qui est disposé coaxialement par rapport à l'arbre d'enroulement (28) et par le fait que pour réaliser la roue libre, il est prévu une cloche d'embrayage (54) solidaire en rotation de l'arbre d'enroulement (28), présentant une denture interne en forme de dents de scie (50), et sur le disque d'entraînement (23) au moins un cliquet (58, 59) pouvant pivoter radialement qui s'encliquette dans la denture interne (55) de la cloche (54) lors d'une activation brusque provoquant une forte montée de l'accélération.

3. Dispositif d'enroulement selon la revendication 1, caractérisé par le fait que le piston rotatif (3) est muni d'un disque d'entraînement (23) et par le fait que l'embrayage à roue libre est prévu entre l'arbre (7) du piston rotatif (3) et le disque d'entraînement (23).

4. Dispositif d'enroulement selon la revendication 3, caractérisé par le fait qu'entre l'arbre (7) du piston rotatif (3) et le disque d'entraînement (23) est prévu un embrayage à roue libre externe radialement, comportant une partie interne (65) disposée de manière solidaire en rotation sur l'arbre (7) et une partie externe constituée par le disque d'entraînement.

5. Dispositif d'enroulement selon la revendication 4, caractérisé par le fait que la bobine (27) d'enroulement de la ceinture peut être entraînée par l'intermédiaire d'un engrenage et par le fait que le disque d'entraînement (23) est un pignon pouvant être mis en prise axialement avec l'un des pignons de l'engrenage afin de constituer un embrayage.

6. Dispositif d'enroulement selon la revendication 1, caractérisé par le fait que le cylindre rotatif (2') et le piston rotatif (3') constituent l'élément de blocage du moteur à entraînement rotatif et par le fait que l'embrayage à roue libre est prévu entre le piston rotatif (3') et le carter (72).

7. Dispositif d'enroulement selon la revendication 6, caractérisé par le fait qu'entre le piston rotatif (3') et le carter (72) est prévu un embrayage à roue libre interne radialement dont la partie interne (73) est disposée de manière solidaire en rotation sur l'arbre du piston rotatif (3').

8. Dispositif d'enroulement selon la revendication 7, caractérisé par le fait que les rouleaux de blocage (79) de l'embrayage à roue libre sont constitués en matière plastique et sont reliés d'une seule pièce à une bague (82).

9. Dispositif d'enroulement selon la revendication 6, caractérisé par le fait que l'embrayage à roue libre est constitué par un disque (78) qui est disposé coaxialement à l'arbre (7) du piston rotatif (3'), qui est solidaire en rotation de cet arbre et qui comporte une denture (74) en dents de scie s'étendant radialement, et par une denture (75) correspondante du carter et opposée à la denture (74) du disque (78), les deux dentures (74, 75) étant sollicitées élastiquement en position de prise réciproque et venant hors de prise par la rotation du piston rotatif (3') dans le sens de rotation du cylindre rotatif (2'), par l'effet de la forme en dents de scie des dentures.

Fig. 1

Fig. 2

0 093 238

Fig. 3

Fig. 4

0 093 238

Fig. 5

Fig. 6

Fig. 9

Fig. 10

Fig. 11

Fig. 12

Fig. 13

0 093 238

Fig. 14

Fig. 15